# EUROPEAN PATENT SPECIFICATION

(11) **EP 3 271 792 B1**
(45) Date of publication and mention of the grant of the patent: **28.08.2019**
(21) Application number: 15741988.8
(22) Date of filing: 22.07.2015
(51) Int. Cl.: B29C 64/386, B29C 64/393, B29C 35/02, G05D 23/00, B33Y 10/00, B33Y 30/00, B33Y 50/00, B29C 64/00

(54) **THERMAL CONTROL SYSTEMS AND METHODS THEREFOR**
WÄRMESTEUERUNGSSYSTEME UND VERFAHREN DAFÜR
SYSTÈMES DE RÉGULATION THERMIQUE ET PROCÉDÉS ASSOCIÉS

(43) Date of publication of application: 24.01.2018
(73) Proprietor: Hewlett-Packard Development Company, L.P., Spring TX 77389 (US)
(72) Inventor: VILAJOSANA, Xavier, 08174 Sant Cugat del Valles (ES); TUSET, Pere, 08174 Sant Cugat del Valles (ES); MOSTACCIO, Diego, Javier, 08174 Sant Cugat del Valles (ES)
(74) Representative: Franks, Adam Peter
(86) International application number: PCT/EP2015/066787
(87) International publication number: WO 2017/012663

(56) References cited:
- WO-A1-01/81031
- US-A1- 2012 164 330
- US-A1- 2015 054 204

## Description

### BACKGROUND

Additive manufacturing systems that generate or fabricate three-dimensional objects on a layer-by-layer basis have been proposed as a potentially convenient way to produce three-dimensional objects. In such additive manufacturing systems, energy sources may be used to heat a build material and an agent. The performance of additive manufacturing systems depends on the repeatability and consistency of the process, which is influenced by the ability to control the temperature distribution over the printing area.

International patent application WO01/81031 describes a device for manufacturing a three-dimensional product using a ray gun to fuse powder on a powder bed.

### BRIEF DESCRIPTION OF THE DRAWINGS

For a better understanding of the examples described herein, and to show more clearly how the examples may be carried into effect, reference will now be made, by way of non-limiting examples, to the following drawings in which:
Fig. 1 schematically shows an example or an apparatus according to the present disclosure.
Fig. 2 shows a flow diagram of an example of a method provided by the present disclosure; and
Fig. 3 shows a flow diagram of another example of a method provided by the present disclosure; and
Fig. 4 shows a flow diagram of another example of a method provided by the present disclosure; and
Fig. 5 shows a flow diagram of another example of a method provided by the present disclosure.

### DETAILED DESCRIPTION

The invention is defined by claims 1 and 11.

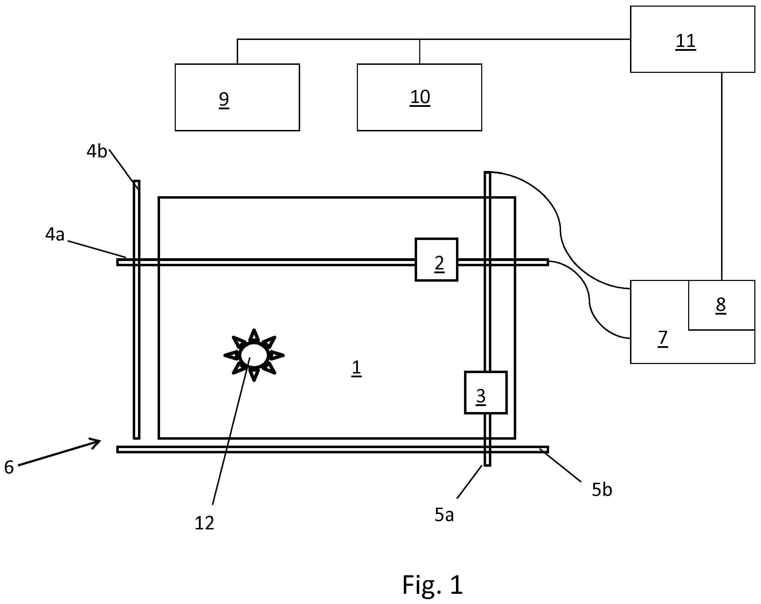

Figure 1 schematically shows components of an example of an additive manufacturing system. It shows build surface 1, a printer carriage 2, a recoater carriage 3 and a guide rail system 6 with sets of guide rails 4a, 4b and 5a, 5b. The guide rail set 4a, 4b allows the printer carriage 2 to travel over the build surface 1. Likewise, the guide rail set 5a, 5b allows the recoater carriage 3 to travel over the build surface 1.

Further components of this example of an additive manufacturing system include an energy source 9, a thermal sensing device 10 and a thermal control logic 11. In one example, the energy source 9, such as a lamp or radiation source or a set of lamps or radiation sources, is positioned over the build surface 1, for applying energy (for example thermal energy or microwave energy) to the building material present on the build surface 1. In this example, the energy source 9 includes twelve lamps (not shown) arranged in an array or grid above the build surface 1 with a distance between the lamps and the build surface 1 ranging approximately, for example, from 60 to 70 cm. The thermal sensing device 10, in this example a thermal imaging camera, is positioned over the build surface 1 for obtaining temperature readings and delivers these as a data stream to the thermal control logic 11. The camera 10 is positioned such that a field of view covers the build surface 1. In this example, the temperature readings may be obtained as a snapshot image grabbed by the thermal imaging camera. In other examples, the thermal sensing device 10, i.e. thermal sensor, may for example be implemented as a heat sensor, thermometer or infra red (IR) camera. The thermal sensing device 10 may be positioned between the lamps such that thermal energy may be applied unhampered, for example by interposing an array of thermal sensors within an array of lamps.

In one example the thermal control logic 11 processes the temperature readings from the thermal sensing device 10 and builds a temperature image map. The thermal control logic 11 further computes the amount of energy that is to be applied by the energy source 9 (e.g. a thermal energy source or microwave energy source), and controls the energy source based on the computed energy. In one example of a printing operation, the recoater carriage 3 deposits a first layer of building material, followed by the printer carriage 2 depositing a printing agent. This is followed by applying energy via the energy source 9 (e.g. thermal or microwave energy), effecting fusion of the build material that has been in contact with the printing agent. The process is then repeated by starting operation of the recoater carriage 3. Repetitive performance of this process may result in a 3D-printed object 12.

The coordinated movement of the recoater carriage 3 and the printer carriage 2 over the guide rail system 6 is controlled by carriage control logic 7. A coordinate system may be used to indicate the respective position of the carriages 2, 3 relative to the build surface 1 i.e. print bed. This allows the carriage control logic 7 to determine the respective positions of the printer carriage 2 and the recoater carriage 3 relative to the build surface 1. In this example, the carriage control logic 7 accommodates an encoding device 8, which encodes the travelling of the carriages 2, 3 into position information. The position information is then delivered by the encoding device 8 to the thermal control logic 11. The encoder device may also be implemented as a separate device and connected to the carriage control logic 7 and the thermal control logic 11.

It is noted that although the example of Figure 1 shows a printer in which a printer carriage 2 and recoater carriage 3 move on a guide rail system 6 in a scanning configuration, the examples described herein are also applicable to printers in which the printer carriage 2 and/or recoater carriage 3 cover the width of the build platform (for example having a page-wide array of printheads, and/or a page-wide array of recoaters).

The thermal control logic 11 uses the position information in building the temperature image map. Thereto, the thermal control logic 11 further builds a temperature image map by filtering a data stream received from the thermal sensing device 10 using position information received from the encoder device 8.

The thermal sensing device 10, the thermal control logic 11 and the encoding device 8 constitute an example of a thermal control system according to this disclosure. A thermal control system may further include an energy source 9 (e.g. thermal or microwave energy source) and be implemented in an additive manufacturing system, such as for example shown in Figure 1.

The examples described herein are related to a method and system for thermal control of a surface during the fabrication of a 3-D object, that is, controlling temperature in an apparatus for generating a three-dimensional object. The performance of an apparatus for three dimensional printing can depend on the repeatability of the process and consistency between builds. In order to obtain consistently high quality builds, in an example the temperature distribution of the build surface may be controlled to be within a narrow range (for example, ±1ºC). Homogeneity of the temperature distribution over the build surface can also be desirable. This may involve adapting the heat distribution and temperature measurement dynamically to react quickly to changing surface heat distributions.

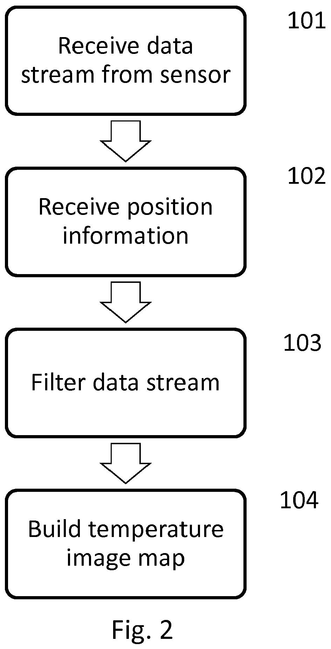

Referring to Figure 2, an example is shown of a method for thermal control in an additive manufacturing system such as for example shown in figure 1. In this example, the method may be performed in the thermal control logic 11. The method is performed by receiving a data stream 101 from the thermal sensor 10 and receiving position information 102 from the encoder device 8. The received position information is used for filtering the received data stream 103, such that filtering 103 is based on the position information. This is followed by building a temperature image map 104 from the filtered data stream.

The order in which the data stream and position information are received may be interchanged, or they may be received at the same instance. The position information may include a time stamp to allow synchronizing with the time instance when the temperature readings were obtained. In one example, the position information may be obtained as an encoder value. This value may represent a number of encoder counts per distance travelled by a carriage, such as N counts per inch, with regard to a predefined point of reference. The point of reference point may be a starting position, such as e.g. a home or return position of the carriage. As an example, assuming an encoder with 1000 counts per inch, a counter value of 15000 would indicate that a carriage has travelled 15 inches from the point of reference in a predefined direction, which is stored as position information.

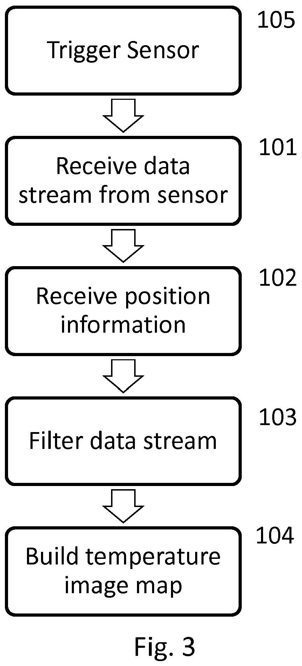

In one example, shown in Figure 3, prior to receiving the data stream 101 the method may include triggering 105 the thermal sensing device 10 for delivering the data stream. e.g. the thermal control logic 11 may be polling the thermal imaging camera 10 two, three or more times per second for taking a snapshot and delivering the data stream.

In one example, the triggering is based on position information. Hence, on receiving the position information the thermal control logic 11 triggers the thermal imaging camera 10 to take a snapshot and deliver the data stream. In another example, the position information may include information on e.g. speed, direction or trajectory of the respective carriages. This allows enhanced timing for synchronizing the time instance the temperature readings are obtained and the position of at least one carriage present above a build surface. Thereto, in one example, the method may include the encoder device 8 encoding a position of at least one carriage present above a build surface as position information. In one example, triggering a sensing device may comprise triggering the sensing device (or at least a portion thereof) to send a data stream at certain times, or triggering the sensing device (or at least a portion thereof) to stop sending a data stream at certain times, for example based on position information.

The filtering of the data stream, in an example performed by the thermal control logic 11, may include discarding data relating to pixels having a thermal reading showing an abrupt temperature variation. Such abrupt variations may be the result of shade areas introduced by one of the carriages 2, 3 or may be the result of light from the lamp 9 being reflected by one of the carriages 2, 3. In some examples these abrupt temperature variations may exceed a value of more than 40°C, or more than 50°C, or more than 60°C. In one example, the discarding of certain pixels may be verified against the position information on the carriages 2, 3 received from the encoding device 8.

In one example, missing data relating to discarded pixels is gathered during at least one subsequent snapshot, for example when at least one carriage is in a different position compared to an earlier snapshot, such that missing data can be gathered using an iterative process to generate a temperature image map. In such an example a temperature image map may be built by considering just those values from a temperature sensing device that are not attributed to carriage shading and/or reflection (for example either based on positional information, or based on detecting an abrupt temperature change, such as a temperature change that exceeds a certain threshold value). In another example, missing data relating to discarded pixels is approximated or inferred, for example based on temperature data from other sensors, or from historical sensor data.

In some examples, the temperature image map obtained in the examples above may be delivered to the energy source 9 (e.g. thermal or microwave energy source), which then is processed and used to determine the amount of energy that is to be applied. In some examples, the thermal control logic 11 may compute the energy (e.g. thermal or microwave energy) to be applied.

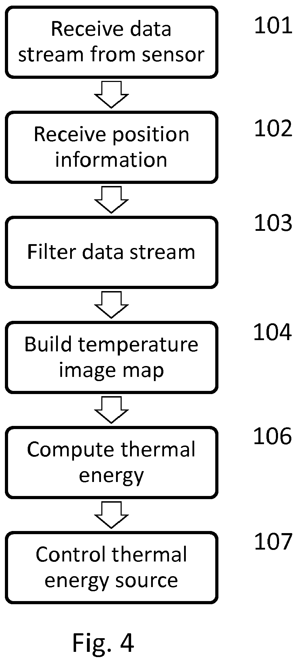

Referring to Figure 4, another example is shown of a method for thermal control in an additive manufacturing system such as for example shown in figure 1. In addition to the flowchart of Figure 1, the method includes computing 106 an amount of energy (e.g. thermal or microwave energy) to be applied by the energy source 9 based on the temperature image map and controlling 107 the energy source 9 based on the computed energy. In one example, controlling the energy source 9 may be implemented by switching on and/or off the energy source 9. In another example, the amount of power delivered to the source 9 may be controlled. In yet another example, the energy source 9 contains multiple independent zones, e.g. multiple halogen lamps, which each may be individually controlled (for example by switching on and/or off or by controlling the amount of power delivered to each respective zone).

In one example, wherein a thermal energy source 9 includes multiple zones, e.g. sixteen halogen lamps, at least one of the zones i.e. lamps may be switched off by the thermal control logic 11 in response to the presence of one of the carriages 2, 3 in the build surface area covered by the at least one zone, as may be known from the position information received from the encoding device 8. This reduces the amount of thermal energy reflected by the carriage underneath, thereby reducing the interference when a snapshot is grabbed by the thermal sensing device 10.

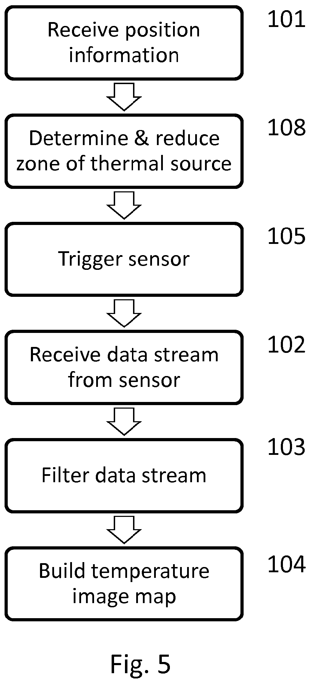

Referring to Figure 5, an example of a method is shown for reducing the energy (e.g. thermal or microwave energy) applied by a specific zone. The method includes, receiving position information 101 from an encoder device 8, determining a zone 108 of a plurality of zones of the energy source 9 covering an area of the build surface 1 where at least one carriage 2, 3 is present, reducing 108 the thermal energy applied by the determined zone of the energy source 9, triggering 105 based on position information the thermal sensing device 10 for delivering the data stream, receiving a data stream 102 from the thermal sensing device 10, filtering the data stream 103 based on the position information, and building a temperature image map 104 from the filtered data stream.

In such an example, energy may be saved by reducing the amount of energy delivered by certain zones of the energy source, based on positional information.

In the foregoing description, numerous details are set forth to provide an understanding of the examples disclosed herein. However, it will be understood that the examples may be practiced without these details. While a limited number of examples have been disclosed, numerous modifications and variations therefrom are contemplated. It is intended that the appended claims cover such modifications and variations.

## Claims

1. A method for thermal control in an additive manufacturing system, comprising:
receiving (102) position information from an encoder device (8);
receiving (101) a data stream from a thermal sensing device (10) ;
filtering (103) the data stream based on the position information; and
building (104) a temperature image map from the filtered data stream.

2. A method according to claim 1, further comprising:
computing (106) an energy to be applied by an energy source (9) based on the temperature image map; and
controlling (107) the energy source based on the computed energy.

3. A method according to claim 2, further comprising, prior to receiving the data stream, triggering (105) the thermal sensing device (10) to deliver the data stream.

4. A method according to claim 3, wherein the triggering is based on position information.

5. A method according to claim 4, further comprising, prior to triggering the thermal sensing device (10):
determining (108) a zone of a plurality of zones of the energy source covering an area of the build surface where at least one carriage is present; and
reducing the energy applied by the determined zone.

6. A method according to claim 1, wherein filtering the data stream comprises discarding data relating to pixels having a thermal reading showing an abrupt temperature variation.

7. A method according to claim 6, wherein the abrupt temperature variation exceeds a value of more than 40°C, or more than 50°C, or more than 60°C.

8. A method according to claim 1, further comprising:
the encoder device (8) encoding a position of at least one carriage (2, 3) present above a build surface as position information.

9. A method according to claim 8, wherein the at least one carriage comprises a printer carriage (2) and/or a recoater carriage (3).

10. A method according to claim 2, wherein controlling the energy source comprises switching on and/or off the energy source (9).

11. A thermal control system, comprising:
a thermal sensing device (10);
an encoder device (8); and
a thermal control logic (11) to build a temperature image map by filtering a data stream received from the thermal sensing device using position information received from the encoder device.

12. A system according to claim 11, further comprising:
an energy source (9); and
wherein the thermal control logic:
computes (106) an energy to be applied by the energy source based on the temperature image map; and
controls (107) the energy source based on the computed energy.

13. A system according to claim 12, wherein the thermal control logic, prior to receiving the data stream:
determines (108) a zone of a plurality of zones of the energy source covering an area of the build surface where at least one carriage is present;
reduces the energy applied by the determined zone; and
triggers the thermal sensing device for delivering the data stream.

14. An additive manufacturing system comprising a thermal control system according to claim 11.

15. An additive manufacturing system according to claim 14, further comprising:
a build surface (1);
a printer carriage (2);
a recoater carriage (3); and
a guide rail system (6) for the printer carriage (2) and recoater carriage (3) respectively.

## Patentansprüche

1. Verfahren zum thermischen Steuern in einem additiven Herstellungssystem, das Folgendes umfasst:
Empfangen (102) von Positionsinformationen von einer Codierervorrichtung (8);
Empfangen (101) eines Datenstroms von einer Wärmeerfassungsvorrichtung (10);
Filtern (103) des Datenstroms basierend auf den Positionsinformationen; und
Erstellen (104) einer Temperaturbildkarte aus dem gefilterten Datenstrom.

2. Verfahren nach Anspruch 1, das ferner Folgendes umfasst:
Berechnen (106) einer von einer Energiequelle (9) anzuwendenden Energie basierend auf der Temperaturbildkarte; und
Steuern (107) der Energiequelle basierend auf der berechneten Energie.

3. Verfahren nach Anspruch 2, das ferner vor dem Empfangen des Datenstroms Folgendes umfasst: Auslösen (105) der Wärmeerfassungsvorrichtung (10), um den Datenstrom zu liefern.

4. Verfahren nach Anspruch 3, wobei das Auslösen auf Positionsinformationen basiert.

5. Verfahren nach Anspruch 4, das ferner vor dem Auslösen der Wärmeerfassungsvorrichtung (10) Folgendes umfasst:
Bestimmen (108) einer Zone mehrerer Zonen der Energiequelle, die einen Bereich der Bauoberfläche abdecken, in dem wenigstens eine Kartusche vorhanden ist; und
Reduzieren der von der bestimmten Zone angewendeten Energie.

6. Verfahren nach Anspruch 1, wobei das Filtern des Datenstroms das Verwerfen von Daten umfasst, die sich auf Pixel beziehen, die eine thermische Ablese aufweisen, die eine abrupte Temperaturänderung zeigt.

7. Verfahren nach Anspruch 6, wobei die abrupte Temperaturänderung einen Wert von mehr als 40°C oder mehr als 50°C oder mehr als 60°C überschreitet.

8. Verfahren nach Anspruch 1, ferner Folgendes umfassend:
die Codierervorrichtung (8), die eine Position wenigstens einer Kartusche (2, 3), die sich über einer Bauoberfläche befindet, als Positionsinformationen codiert.

9. Verfahren nach Anspruch 8, wobei die wenigstens eine Kartusche eine Druckerkartusche (2) und/oder eine Wiederbeschichtungskartusche (3) umfasst.

10. Verfahren nach Anspruch 2, wobei das Steuern der Energiequelle ein Einschalten und/oder ein Ausschalten der Energiequelle (9) umfasst.

11. Thermisches Steuersystem, das Folgendes umfasst:
eine Wärmeerfassungsvorrichtung (10);
eine Codierervorrichtung (8); und
eine thermische Steuerlogik (11) zum Erstellen einer Temperaturbildkarte durch Filtern eines von der Wärmeerfassungsvorrichtung empfangenen Datenstroms unter Verwendung von Positionsinformationen, die von der Codierervorrichtung empfangen werden.

12. System nach Anspruch 11, das ferner Folgendes umfasst:
eine Energiequelle (9); und
wobei die thermische Steuerlogik:
eine von der Energiequelle anzuwendende Energie basierend auf der Temperaturbildkarte berechnet (106); und
die Energiequelle basierend auf der berechneten Energie steuert (107).

13. System nach Anspruch 12, wobei die thermische Steuerlogik vor dem Empfangen des Datenstroms:
eine Zone mehrerer Zonen der Energiequelle bestimmt (108), die einen Bereich der Bauoberfläche abdeckt, in dem wenigstens eine Kartusche vorhanden ist;
die von der bestimmten Zone angewendete Energie reduziert; und
die Wärmeerfassungsvorrichtung zum Liefern des Datenstroms auslöst.

14. Additives Herstellungssystem, das ein thermisches Steuersystem nach Anspruch 11 umfasst.

15. Additives Herstellungssystem nach Anspruch 14, das ferner Folgendes umfasst:
eine Bauoberfläche (1);
eine Druckkartusche (2);
eine Wiederbeschichtkartusche (3); und
ein Führungsschienensystem (6) für die Druckkartusche (2) beziehungsweise die Wiederbeschichtkartusche (3).

## Revendications

1. Procédé de régulation thermique dans un système de fabrication additive, comprenant :
la réception (102) d'informations de position en provenance d'un dispositif codeur (8) ;
la réception (101) d'un flux de données en provenance d'un dispositif de détection thermique (10) ;
le filtrage (103) du flux de données en fonction des informations de position ; et
l'élaboration (104) d'une carte thermographique à partir du flux de données filtré.

2. Procédé selon la revendication 1, comprenant en outre :
le calcul (106) d'une énergie à appliquer par une source d'énergie (9) en fonction de la carte thermographique ; et
la régulation (107) de la source d'énergie en fonction de l'énergie calculée.

3. Procédé selon la revendication 2, comprenant en outre, avant la réception du flux de données, le déclenchement (105) du dispositif de détection thermique (10) afin de fournir le flux de données.

4. Procédé selon la revendication 3, dans lequel le déclenchement est fonction des informations de position.

5. Procédé selon la revendication 4, comprenant en outre, avant le déclenchement du dispositif de détection thermique (10) :
l'identification (108) d'une zone d'une pluralité de zones de la source d'énergie couvrant une zone de la surface de construction où au moins un chariot est présent ; et
la réduction de l'énergie appliquée par la zone identifiée.

6. Procédé selon la revendication 1, dans lequel le filtrage du flux de données comprend l'élimination des données relatives à des pixels dont le relevé thermique présente une variation soudaine de température.

7. Procédé selon la revendication 6, dans lequel la variation soudaine de température excède une valeur supérieure à 40°C, ou supérieure à 50°C, ou supérieure à 60°C.

8. Procédé selon la revendication 1, comprenant en outre :
le dispositif codeur (8) codant une position d'au moins un chariot (2, 3) présent au-dessus d'une surface de construction en tant qu'information de position.

9. Procédé selon la revendication 8, dans lequel l'au moins un chariot comprend un chariot d'imprimante (2) et/ou un chariot de recouvrement (3).

10. Procédé selon la revendication 2, dans lequel la régulation de la source d'énergie comprend la commutation en position marche et/ou arrêt de la source d'énergie (9).

11. Système de contrôle thermique, comprenant :
un dispositif de détection thermique (10) ;
un dispositif codeur (8) ; et
une logique de régulation thermique (11) pour élaborer une carte thermographique en filtrant un flux de données reçu du dispositif de détection thermique à l'aide des informations de position reçues du dispositif codeur.

12. Système selon la revendication 11, comprenant en outre :
une source d'énergie (9) ; et
dans lequel la logique de régulation thermique :
calcule (106) une énergie à appliquer par la source d'énergie en fonction de la carte thermographique ; et
régule (107) la source d'énergie en fonction de l'énergie calculée.

13. Système selon la revendication 12, dans lequel la logique de régulation thermique, avant de recevoir le flux de données :
identifie (108) une zone d'une pluralité de zones de la source d'énergie couvrant une zone de la surface de construction où au moins un chariot est présent ;
réduit l'énergie appliquée par la zone identifiée ; et
déclenche le dispositif de détection thermique afin de fournir le flux de données.

14. Système de fabrication additive comprenant un système de régulation thermique selon la revendication 11.

15. Système de fabrication additive selon la revendication 14, comprenant en outre :
une surface de construction (1) ;
un chariot d'imprimante (2) ;
un chariot de recouvrement (3) ; et
un système de rails de guidage (6) pour le chariot d'imprimante (2) et le chariot de recouvrement (3), respectivement.
